# EUROPEAN PATENT SPECIFICATION

(11) **EP 1 826 724 B1**
(45) Date of publication and mention of the grant of the patent: **25.03.2015**
(21) Application number: 06270025.7
(22) Date of filing: 28.02.2006
(51) Int. Cl.: G06T 11/60

(54) **Object-level image editing using tiles of image data**
Bildbearbeitung auf Objektebene unter Verwendung von Bilddatenplatten
Edition d'image au niveau objet utilisant les titres des données d'image

(43) Date of publication of application: 29.08.2007
(73) Proprietor: Microsoft Corporation, Redmond, WA 98052 (US)
(72) Inventor: Winn, John Microsoft Research Ltd., Cambridge, Cambridgeshire CB3 0FB (GB); Rother, Carsten Microsoft Research Ltd., Cambridge, Cambridgeshire CB3 0FB (GB)
(74) Representative: Free, Rachel Alder

(56) References cited:
- CHEN H ET AL ASSOCIATION FOR COMPUTING MACHINERY: "EXAMPLE-BASED COMPOSITE SKETCHING OF HUMAN PORTRAITS" PROCEEDINGS NPAR 2004. 3RD. INTERNATIONAL SYMPOSIUM ON NON-PHOTOREALISTIC ANIMATION AND RENDERING. ANNECY, FRANCE, JUNE 7 - 9, 2004, SYMPOSIUM ON NON - PHOTOREALISTIC ANIMATION AND RENDERING, NEW YORK, NY : ACM, US, 7 June 2004 (2004-06-07), pages 95-102, XP001210027 ISBN: 1-58113-887-3
- WU C ET AL: "AUTOMATIC EYEGLASSES REMOVAL FROM FACE IMAGES" IEEE TRANSACTIONS ON PATTERN ANALYSIS AND MACHINE INTELLIGENCE, IEEE SERVICE CENTER, LOS ALAMITOS, CA, US, vol. 26, no. 3, March 2004 (2004-03), pages 322-336, XP001190677 ISSN: 0162-8828
- NICHOLAS DIAKOPOULOS ET AL: "Content Based Image Synthesis" CONFERENCE ON IMAGE AND VIDEO RETRIEVAL (CIVR) 2004, July 2004 (2004-07), pages 299-307, XP019008942 Dublin, ireland
- BOLDYS J: "Bayesian supervised segmentation of objects in natural images using low-level information" IMAGE AND SIGNAL PROCESSING AND ANALYSIS, 2003. ISPA 2003. PROCEEDINGS OF THE 3RD INTERNATIONAL SYMPOSIUM ON ROME, ITALY SEPT. 18-20, 2003, PISCATAWAY, NJ, USA,IEEE, vol. 2, 18 September 2003 (2003-09-18), pages 1054-1059, XP010704013 ISBN: 953-184-061-X
- BARRETT W A ET AL: "Object-based image editing" COMPUTER GRAPHICS PROCEEDINGS, PROCEEDINGS OF SIGGRAPH ANNUAL INTERNATIONAL CONFERENCE ON COMPUTER GRAPHICS AND INTERACTIVE TECHNIQUES, XX, XX, 2002, pages 1-8, XP002338402
- WINN J ET AL: "Object Categorization by Learned Universal Visual Dictionary" COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, 17 October 2005 (2005-10-17), pages 1800-1807, XP010857031 ISBN: 0-7695-2334-X
- RYTSAR ET AL.: "interactive segmentation with hidden objec-based annotations: towards smart media" PROCEEDINGS OF THE SPIE ELECTRONICS IMAGING, STORAGE AND RETRIEVAL METHODS AND APPLICATIONS FOR MULTIMEDIA, January 2004 (2004-01), pages 1-9, XP002393102 San Jose, CA, USA
- YAOWU XU ET AL: "Object Segmentation and Labelingby Learning From Examples" IEEE TRANSACTIONS ON IMAGE PROCESSING, IEEE SERVICE CENTER, PISCATAWAY, NJ, US, vol. 12, no. 6, June 2003 (2003-06), XP011074408 ISSN: 1057-7149

## Description

### TECHNICAL FIELD

This description relates generally to image editing; it is particularly related to, but in no way limited to, systems and methods for editing digital images using information about objects in those images.

### BACKGROUND

Image processing tools such as Microsoft's Digital Image Suite (trade mark), Adobe Photoshop (trade mark) and Illustrator (trade mark) as well as Google Picasa (trade mark) are known. There is an increasing demand for such tools in both the domestic and professional markets. It is required to simplify and reduce the actions needed by the user in order to operate the image processing tools as well as to provide a tool that operates quickly and effectively. In addition it is required to provide increased functionality within the tools such that users can perform more types of operations on digital images as well as to improve existing functionality such that the results of operations are more realistic and aesthetically pleasing.

It is required to provide an improved system and method for image editing or image processing which overcomes or at least mitigates one or more of the problems mentioned herein.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Systems and methods for editing digital images using information about objects in those images are described. For example, the information about objects comprises a segmentation, depth ordering information and/or information about the class each object is a member of. Examples of classes include sky, building, aeroplane, grass and person. This object-level information is used to provide new and/or improved editing functions such as cut and paste, filling-in image regions using tiles or patchworks, digital tapestry, super resolution, auto cropping, auto colour balance, object selection, depth of field manipulation, object replacement, and object synthesis. In addition improvements to user interfaces for image editing systems are described which use object-level information.

The present example provides a method of editing a source digital image comprising the steps of:
- (i) accessing automatically generated object-level information about the source digital image, that information comprising segmentation of the images into one or more objects and, for each of the objects, details of a class that the object is a member of;
- (ii) automatically processing the source digital image using tiles of image data and the object-level information to form an output digital image.

Another example provides a corresponding apparatus for editing a source digital image comprising:
- an interface arranged to access automatically generated object-level information about the source digital image, that information comprising segmentation of the images into one or more objects and, for each of the objects, details of a class that the object is a member of;
- a processor arranged to automatically process the source digital image using tiles of image data and the object-level information to form an output digital image

In an example, the object-level information comprises information about depth ordering of at least some of the objects. Optionally it also comprises object attributes and positions of the object parts.

Preferably the method further comprises combining at least part of the source digital image with one or more reference digital images to form the output digital image and wherein the method comprises accessing automatically generated object-level information about the reference digital images, that information comprising segmentation of the reference images into one or more objects and, for each of the objects, details of a class that the object is a member of.

Preferably the step of automatically processing the source image and any reference images comprises using tiles and selection of the tiles is carried out on the basis of the object-level information.

For example the tiles are to be added to a particular object in the source image or reference images, those tiles being selected on the basis of the object-level information about that particular object, the selection being from the particular object or object part in any of: the source and reference images, other objects of the same class in the source and reference images, and a store of other objects of the same class.

Preferably the tiles are selected on the basis of depth ordering information.

In an example said step (ii) of automatically processing the image comprises cutting or copying an object from the source image and pasting it into at least one target image; said method further comprising accessing object-level information about the target image, and pasting the object into the target image on the basis of the object level information about the target image to form the output image.

Preferably that method further comprises cutting the object from the source image and filling in any regions of that object that had been occluded in the source image on the basis of object-level information about the object.

In another example the method further comprises pasting the cut or copied object into the target image after automatically editing the cut or copied object to be pasted on the basis of the object-level information about the target image where said object-level information can comprise semantic information.

Preferably the step of automatically editing the cut or copied object comprises any of: resizing, recolouring, refocusing, changing the orientation, changing facial expressions; and changing illumination.

Another example provides a computer program comprising computer program code means adapted to perform all the steps of any of the methods described above when said program is run on a computer. The computer program can be embodied on a computer readable medium.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1. is a schematic diagram of input to an object-level image editing system;
FIG. 2 is a schematic diagram of an object-level image editing system in more detail;
FIG. 3 is a high level flow diagram of a method of editing an image using an object-level image editing system;
FIG. 4 is a flow diagram of a method of editing an image using tiling guided by object-level information;
FIG. 5 shows two example user interface displays of an object-level image editing system used for semantic object removal;
FIG. 6 is a flow diagram of a method of smart copy and paste and smart cut and paste;
FIG. 7a and FIG. 7b are schematic diagrams indicating smart copy and paste;
FIG. 8 is an example of an output image produced using smart digital tapestry;
FIG. 9 is a flow diagram of a method of digital tapestry guided using object-level information;
FIG. 10 is a flow diagram of a method of super resolution using object-level information;
FIG. 11 is a flow diagram of a method of automatically cropping an image using object-level information;
FIG. 12 is a flow diagram of a method of automatically adjusting the colour of a source image using object-level information;

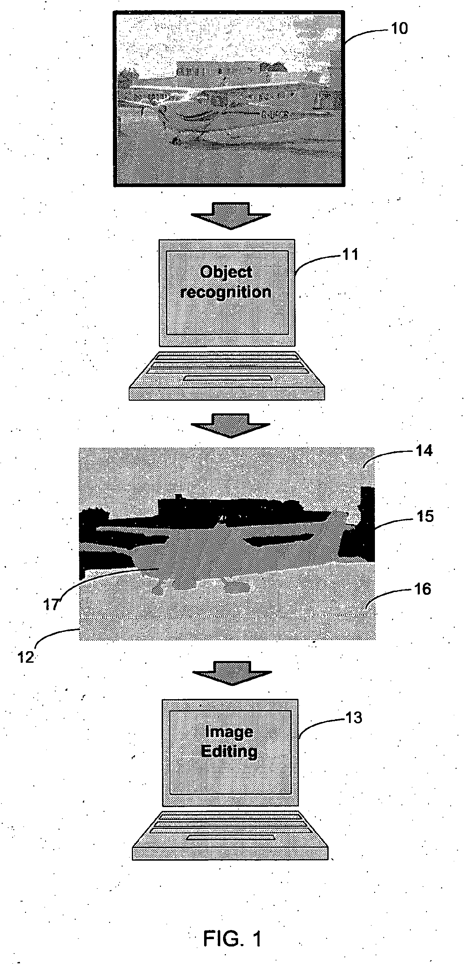

FIG. 1 3 is a flow diagram of a single user-action method of selecting an object;

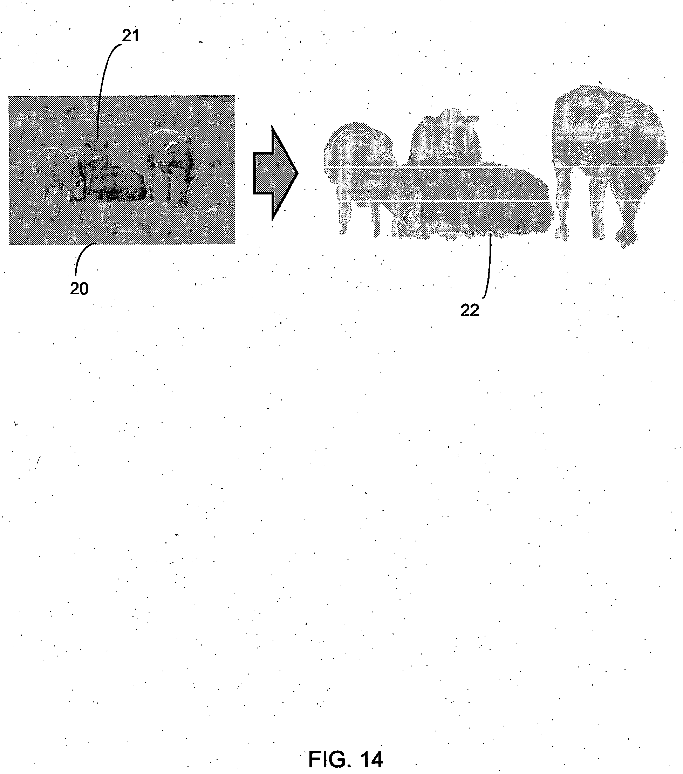

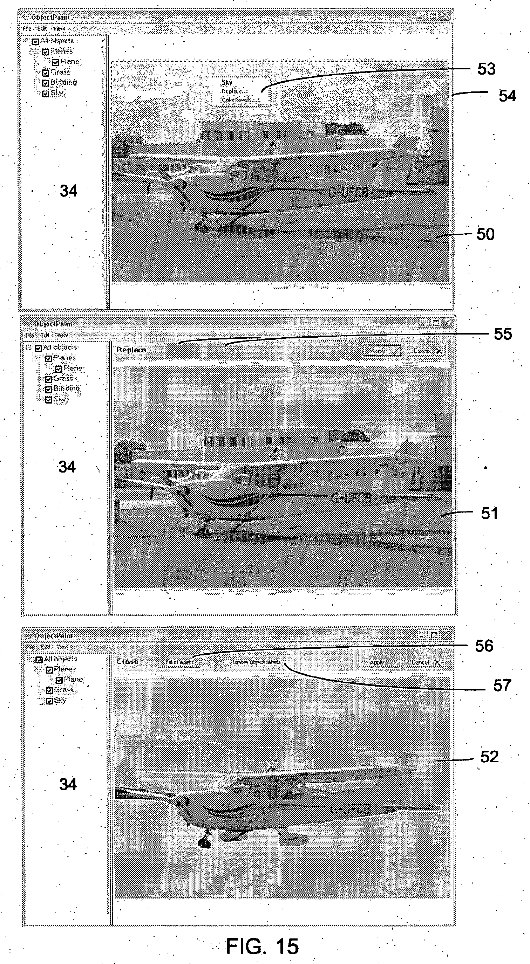

FIG. 14 shows a source image and the results of selecting a foreground object being a group of four cows from the source image using object-level information;
FIG. 1 5 shows example user interface displays demonstrating object replacement using the image editing system;

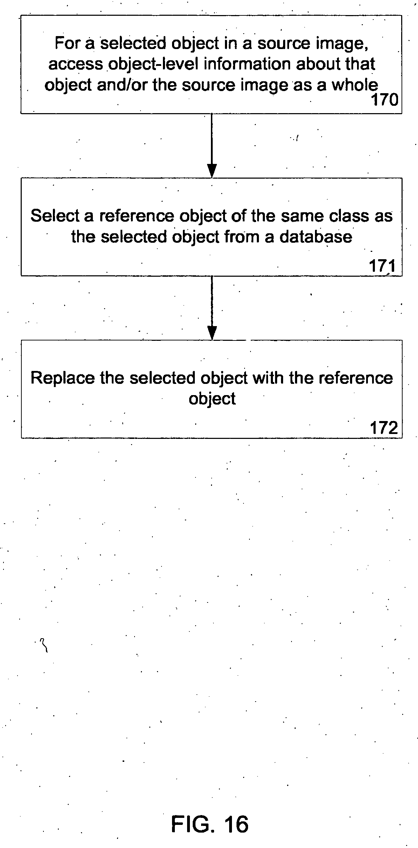

FIG. 16 is a flow diagram of a method of object replacement using object-level information;

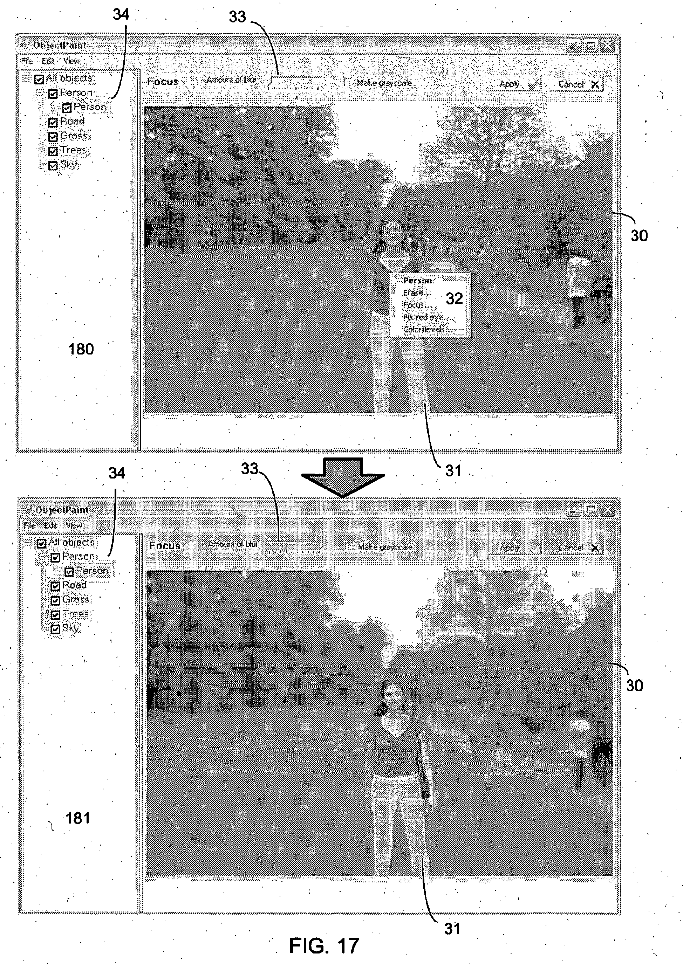

FIG. 17 shows two user interface displays demonstrating depth of field manipulation using object-level information;

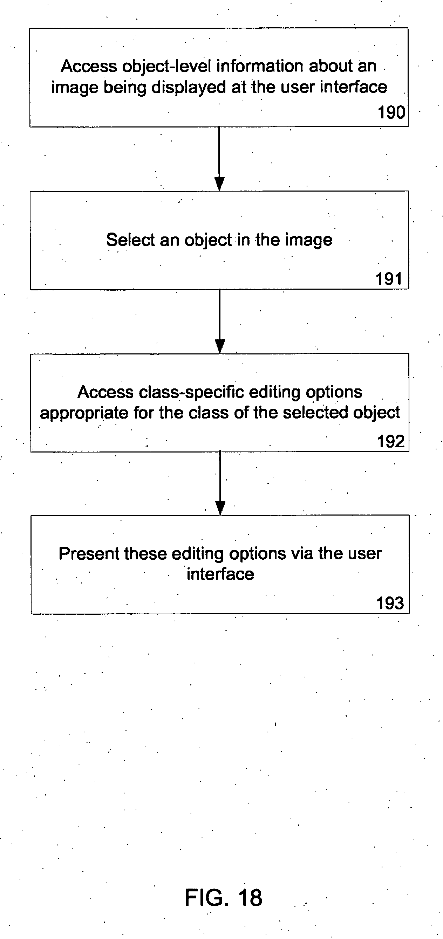

FIG. 18 is a flow diagram of a method of providing a user interface of an image editing system using object level information.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

FIG. 1 is a schematic diagram showing inputs to an object-level image editing system. A source image 10 of any suitable type in digital form is provided to an object recognition system 11. The source image 10 in the present example shows a light aircraft standing on grass in front of a building. A cloudy sky is visible above the building. The object recognition system produces an analysis of the source image. The analysis results are represented in FIG. 1 as an image 12 although this is not essential. Any suitable form of representation can be used. The analysis of the source image comprises a segmentation of that source image into one or more objects. In the example shown the image is segmented into four main regions which are indicated by shaded regions in image 12 of FIG. 1. The object recognition system also labels each segmented region as being of a particular type of object class. In this example the four regions are identified as being of object classes sky 14, grass 16, building 1 5 and plane 17. The information produced by the object recognition system is referred to herein as object-level information and this is accessible to the image editing system 1 3 of the present invention together with the source image 10 itself.

Any suitable type of object recognition system 11 can be used which has the ability to segment a source image and identify appropriate object classes for segmented regions of the source image. At least a plurality of possible object classes is used to label the segmented image regions and in a preferred example, around 20 object classes it is possible to increase the scale of the system and use much higher numbers of object classes. Examples of object classes comprise sky, grass, person, building, horse, plane, cow, sheep, water, boat, tree, road and flower. In some embodiments the object recognition system 11 is preferably also able to provide depth ordering information for the identified objects although this is not essential. Also, the object recognition system is preferably, but not essentially, able to identify particular instances of objects (e.g. recognise an image of a person as being of a particular named individual) and to identify information about the object such as its orientation, object attributes, presence and position of object parts (e.g. person's face, leaves of a tree, roof of a building). The object recognition system may optionally comprise semantic information associated with the object classes such as information about the relative sizes of objects of class person and building or information about the general position of objects such as sky in images.

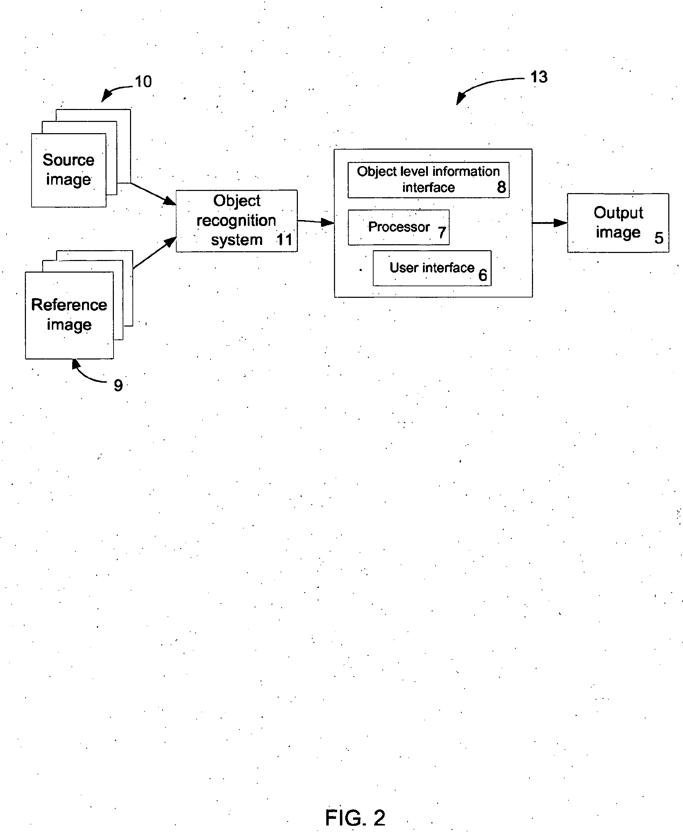

FIG. 2 is a schematic diagram of the object-level image editing system 13 of FIG. 1 in more detail. One or more source images 10 and optionally one or more reference images 9 are input to the object recognition system 11 discussed above. For example, the source image may comprise a photograph of a person against a walled background. The reference image may comprise a garden landscape. In the case that the image of the person is to be pasted onto the garden landscape the output image would comprise an image of the person against a garden landscape. The object recognition system is preferably used to analyse both the source images and reference images. The recognition results, in addition to the source 10 and reference images 9 are made available to the object-level image editing system 13. That system comprises an object-level information interface 8 which interfaces with the object recognition system 11 or accesses results of that object recognition system in any suitable manner. A processor 7 is also provided and optionally a user interface 6. The processor is of any suitable type such as a personal computer, an operating system, a dedicated processor or a distributed system. The object-level image editing system produces an output image 5 on the basis of the various inputs.

By using the object-level information provided by the object recognition system we are able to provide new ways of automatically editing images and to improve existing methods of automatically editing images. A high level summary of a method of editing an image is now given and then examples of particular methods are set out.

In any of the embodiments described herein it is also possible for a user to optionally modify or correct the object-level information prior to using that information for image editing. The user can make these modifications or corrections manually or in any other suitable manner.

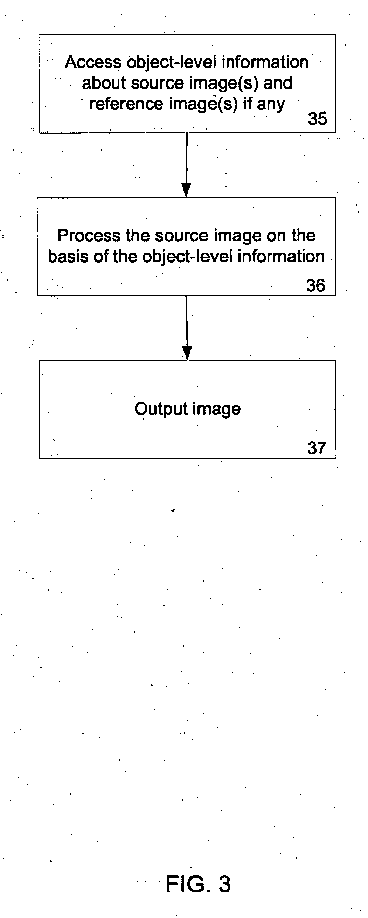

FIG. 3 is a high level flow diagram of a method of editing an image using an object level image editing system. Object level information about one or more source images, and optionally one or more reference images is accessed (see box 35). This is done using the interface 8 of FIG. 2. The source image(s) and any reference image(s) are processed on the basis of the object level information (see box 36) and an output image formed (see box 37).

Examples of particular methods of editing images using object-level information are now given:

### Smart tiling

In our earlier US patent application entitled "Image region filling by example-based tiling" published on 26 August 2004 with publication number US2004-0165787A1, we describe using tiles of image data to perform various tasks including, but not limited to, repairing (e.g. hiding tears, scratches, stains, and other damage), correcting (e.g. removing red eyes and other undesirable features), and modifying (e.g. removing features of the image) a digital image. In many such activities, the task may be accomplished by "filling" a region in the image with other image data. In that earlier patent application we describe borrowing example tiles of image data from the proximity of a destination image region or some other source to generate new image data for filling in the region. The example-based filling system described identifies appropriate filling material to replace a destination region in an image and fills in the destination region using this material, thereby alleviating or minimising the amount of manual editing required to fill in a region in an image. Destination regions may be designated by user input (e.g. selection of an image region by a user) or by other means (e.g. specification of a colour or feature to be replaced).

In the present application we extend and build on that earlier work by enabling the selection of appropriate filling material to be guided using the object-level information. In addition, we enable the designation of destination regions to be automatically achieved, by using the object-level information. The term "tile" is used herein to refer to a region or patch of image data suitable for filling a destination region of a digital image. A tile can be represented by a group or grid of pixels or in any other suitable manner.

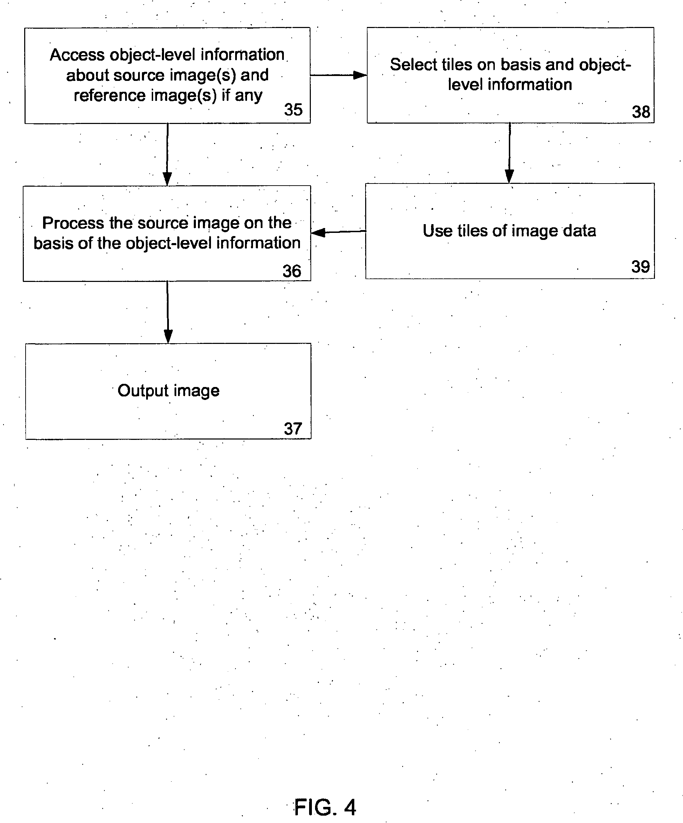

FIG. 4 is a flow diagram of a method of using tiles in the object-level image editing system of the present application. This figure is the same as FIG. 3 except that tiles of image data are used in the processing stage (see box 39). For example, the tiles of image data are patches of pixels or grids of pixels. The tiles of image data can be used for example, to fill in regions of an image where an object has been deleted. Preferably the tiles of image data are selected on the basis of the object-level information (see box 38). For example, they are selected from an object of the same class (or the same object part) as an object/parts which needs to be filled. The tiles can be selected from any of: the source and reference images, other objects of the same class in the source and reference images, and a store of other objects of the same class (as the object being filled).

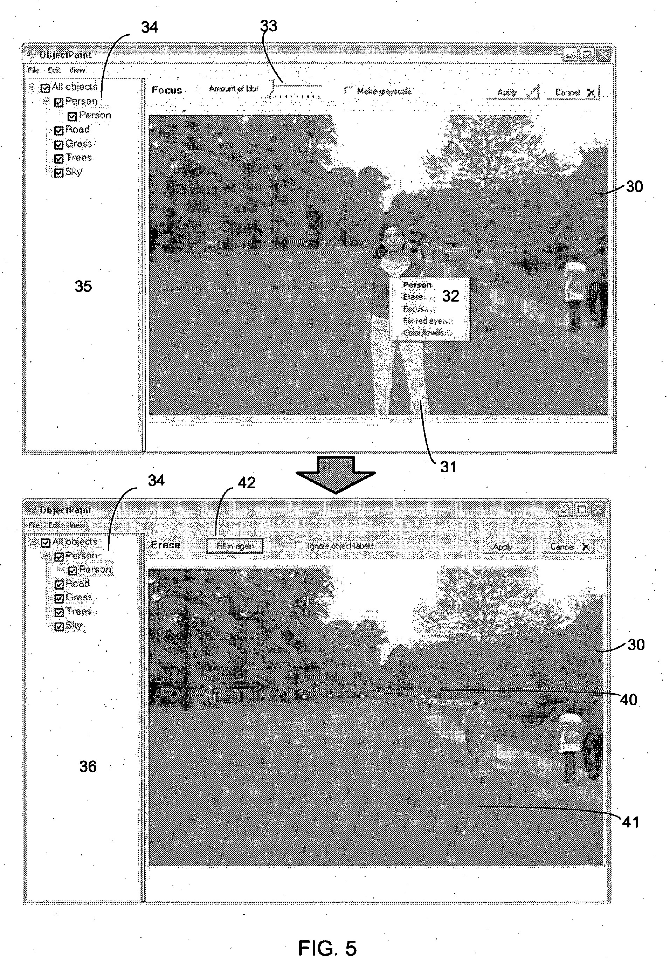

In addition, depth ordering information can be used to guide selection of tiles for filling in image regions. For example the selected tiles need only be consistent with objects behind the object to be removed. This is now discussed with reference to the example in FIG. 5. FIG. 5 gives two example user interface displays 35, 36 from our object-level image editing system used for semantic object removal. Display 35 comprises an image of a person 31 standing in a grassed area with a path receding into a background 30 which has trees and sky visible. Each display 35, 36 has graphical user interface devices such as a hierarchical selection structure 34 and an operation bar 33. In the display 35 the operation bar 33 indicates that the focus of the image is being worked on, presents a slider bar 33 to adjust the amount of blur in the image and provides a selection box to make the image greyscale rather than colour for example. Buttons to apply the settings or cancel them are also provided. In the example of display 35 the user has selected the person 31 in any suitable way, such as by placing the mouse pointer over the person 31 and is presented with a menu 32 of available actions including in this example, erase, focus, fix red eye, and colour levels. Suppose the user selects the erase function from menu 32. The image of the person 31 is "semantically" erased giving the result shown in display 36.

In display 36 it can be seen that the background 30 is preserved, the image of the person 31 is omitted and the image region previously taken up by the image of the person 31 is filled in, in a manner appropriate to the rest of the image.

The image region previously taken up by the person is indicated by reference numerals 40 and 41 in FIG. 5. Depth ordering and shape information is used to infer that the region behind the person is to be filled in using "grass like" tiles in region 41 and "tree like" tiles in region 40. Without this depth ordering information it could be that "grass like" tiles are used to fill in the whole region where the image of the person 31 previously was. Also, if there were objects in front of the person being erased, the depth information would allow them to be ignored during the fill in. In addition, segmentation information, segmenting the image into grass, trees, people objects and sky is used to infer which types of tiles to use.

### Smart copy and paste (and smart cut and paste)

The processes of copying and cutting image regions are preferably identical except that the process of cutting also involves filling in the area of source image from which a region is cut. Preferably the filling in process is carried out intelligently using object-level information.

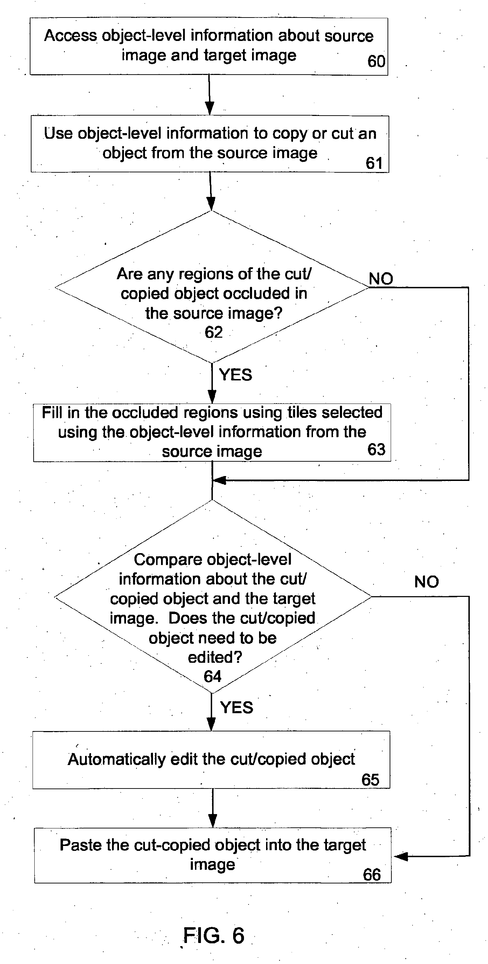

FIG. 6 is a flow diagram of a method of using the object-level information for smart copy and paste, or smart cut and paste. Assume that a source image comprises an object to be cut or copied and a reference image which in this case is referred to as a target image is provided to paste the cut/copied object into. The method comprises accessing object-level information about the source and target image as discussed above (see box 60 of FIG. 6). The object-level information is used to copy or cut an object from the source image (see box 61). For example, the segmentation information is used to identify objects and one of these is selected either automatically (for example, using depth ordering information to pick a foreground object, or using pre-specified rules in conjunction with the object class information) or as a result of user input. Once an object is selected, any suitable method of cutting or copying that object is used as known in the art. In the case of cutting, we preferably also fill-in the area of the source image from which a region is cut. This filling in is carried out intelligently using object-level information.

An assessment is then made as to whether there are any regions of the cut/copied object which are occluded in the source image. Depth ordering information and or other object-level information is used to make this assessment. If there are occluded regions, these are filled in (see box 63) using tiles selected using the object-level information from the source image (as discussed above). In addition regions in the source image that are left blank as a result of any cut operation are filled in if required. This is done using tiles selecting using the object-level information.

The next stage comprises comparing the object-level information about both the cut/copied object and the target image and deciding whether the cut/copied object needs to be edited (see box 64). For example, the size of the cut/copied object may need to be altered to correspond to the scale of the objects in the target image. Object class information may comprise information about the relative size of objects of different classes. For example, objects of class building can be specified as larger by a certain factor than objects of class person. Using this information in conjunction with depth ordering information it is possible to automatically determine an appropriate size for the object to be pasted into the target image. In another example, the focus of the object to be pasted may need to be altered to match the focus in the target image. Again, depth ordering information can be used together with information about depth of field information in the target image to decide what focus to apply to the object to be pasted. In another embodiment the colour of the object to be pasted can be altered according to colour details of the target image. Other options include changing the illumination or orientation of the object to be pasted, changing facial expressions in images of people to match those of objects in the target image and others.

If a determination is made to edit the object to be pasted in a particular way that object is automatically edited as required (see box 65) and then pasted into the target image (66). It is noted that any of the steps of the method may be carried out in parallel or in different orders to achieve an equivalent result.

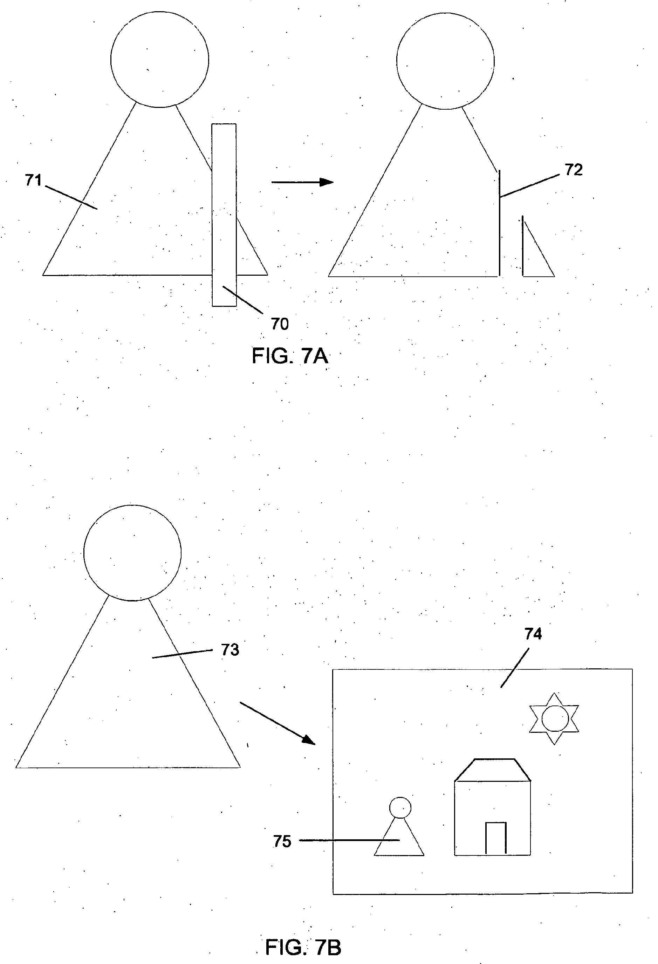

FIGs. 7a and 7b illustrate an example of using smart copy and paste. FIG. 7a schematically shows an image of a person 71 standing behind a post 70. The image of the person is to be copied and pasted into a reference image, referred to in this example as a target image 74 (see FIG 7b). The result of copying the image of the person is indicated in FIG 7a and it can be seen that a blank region 72 exists where the post 70 previously occluded part of the image of the person. During the copying process the object-level information about the person is used which provides segmentation for the person and depth ordering information about the post and person.

The occluded region 72 is filled in using tiles to yield a complete image 73 (see FIG. 7b). That complete image 73 is to be pasted into target image 74 which shows a house. Object-level information about the target image indicates that the relative size of a house and a person is such that the complete image 73 needs to be resized. After appropriate re-sizing, and any other determined edits such as refocusing or recolouring the image of the person 75 is pasted into the reference image.

### Improved digital tapestry

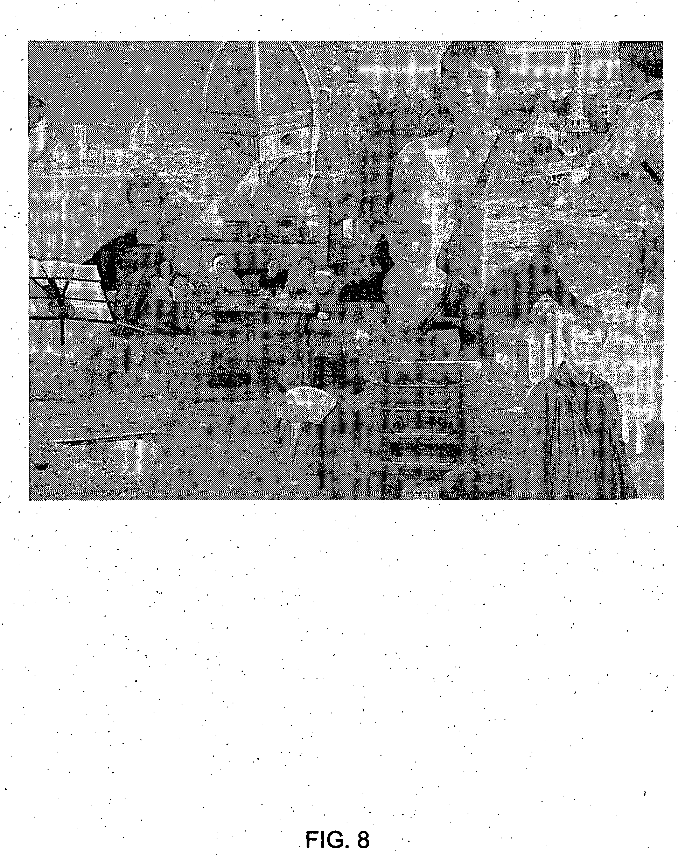

FIG. 8 is an example of an output image produced from our object-level image editing system after performing improved digital tapestry. The term "digital tapestry" is used herein to refer to using parts of a plurality of source images and blending those parts together to form a single output image. In the example shown in FIG. 8 12 source images were used to form the single digital tapestry output image.

Any suitable method of blending the image parts together can be used. For example, our earlier European Patent application number 05254745.2, filed on 28 July 2005, entitled "Image Blending" describes a suitable method of digital tapestry. Our CVPR conference paper entitled "Digital Tapestry" Carsten Rother, Sanjiv Kumar, Vladimir Kolmogorov, Andrew Blake, 2005, San Diego, USA also describes a suitable method of digital tapestry. In the present application, digital tapestry is improved by enabling selection of image parts from the source image to be guided using the object-level information about the source images. In addition, selection of positions in the output image to place those image parts is guided using the object-level information.

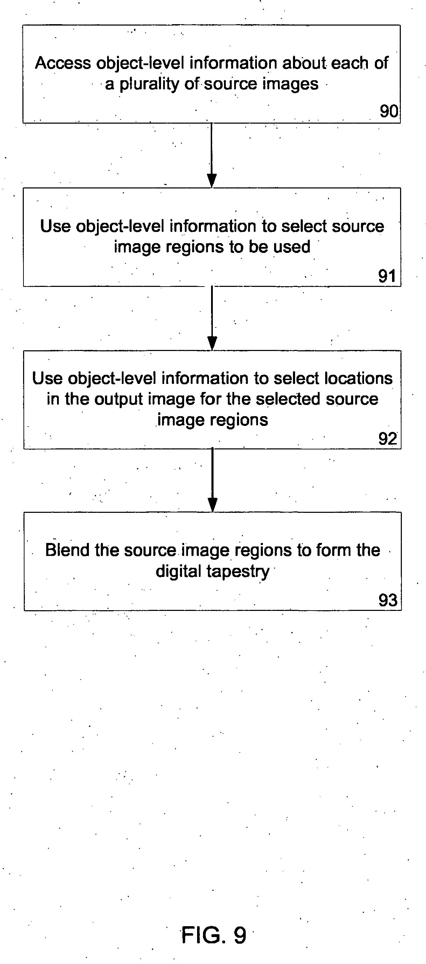

FIG. 9 is a flow diagram of a method of improved digital tapestry or image blending. It comprises accessing object-level information about each of a plurality of source images using the methods described above (see box 90). The object-level information is used to select source image region to be used (see box 91). For example, object class information may be used in conjunction with specified criteria or rules to select pertinent image regions. If there are many images of people for example, it may be specified to select only a threshold number of these for inclusion. Criteria or rules may be specified to prefer some classes of object over others, for example, with grass or roads given lower preference than animals or people. It is also possible to give preference to objects of rare classes of which only one or two for example exist in the source images.

The object-level information may also be used to automatically select locations in the output image for the selected source image regions (see box 92). For example, source image regions may be positioned such that objects of class sky are placed near the top of the output image. The source image regions are then blended to form the digital tapestry as discussed above (see box 93). For example, in FIG. 8 it can be seen that the source image regions containing sky are all positioned so that the sky is at the top of the composite, output image. Also, the images of people are selected such that different people are shown, or where the same person is shown more than once, different poses of that person are given.

### Super resolution using object level information

Super resolution is the process of making a high resolution image from a low resolution one. Existing super resolution methods ignore the type of object when creating the high resolution image and hence often fill in inappropriate details. An example of existing super resolution methods is given in William T. Freeman, Thouis R. Jones, and Egon C. Pasztor, "Example-based super-resolution", IEEE Computer Graphics and Applications, March/April, 2002.

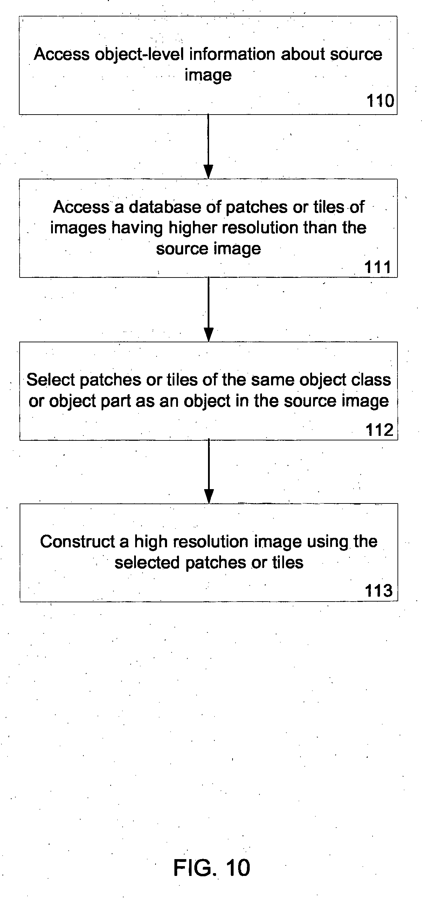

FIG. 10 is a flow diagram of a method of using object-level information to improve super resolution. The source image has lower resolution than the output image. Object level information is accessed about the source image (see box 110) as described above. A database of patches or tiles of images having higher resolution than the source image is then accessed (see box 111). The image editing system selects patches or tiles of the same object class or object part as an object in the source image (see box 112) and constructs a high resolution image using the selected patches or tiles (see box 113). The tiles and the method of filling using those tiles may be as described above in the section headed "smart tiling" or any other suitable method may be used.

### Auto-crop using object level information

A common need in image editing is the ability to crop images to create aesthetically pleasing images in which the proportions of various objects depicted and the relative positions of objects and colours are harmonious and pleasant. It is also required to be able to crop images to meet particular requirements, such as passport photographs, and to illustrate objects or scenes in the most clear and understandable way. Previously artists and graphic designers have manually cropped digital images to achieve these and similar objectives. However, there is a desire to enable non-skilled users to crop images effectively and to provide systems which automatically crop images without the need for human intervention.

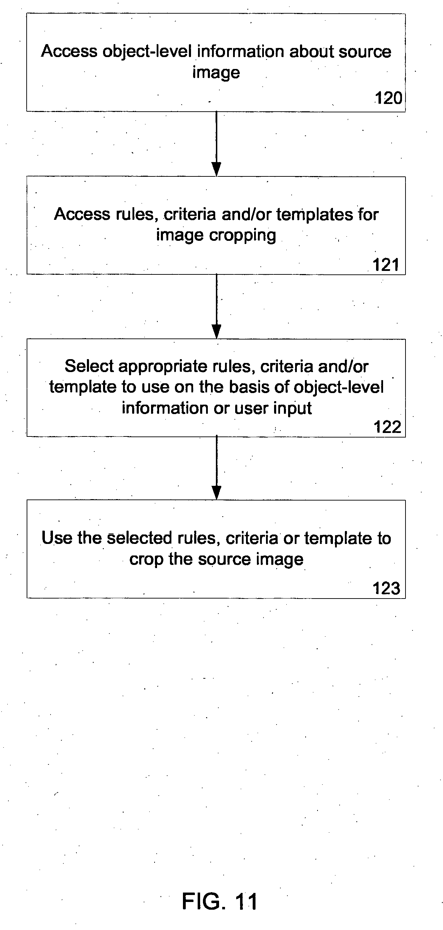

FIG. 11. is a flow diagram of a method of automatically cropping a source image using object-level information. The object level information about the source image is accessed (see box 120) as described above. The image editing system then accesses rules, criteria and/or templates (which may be probabilistic) for image cropping. These rules, criteria and/or templates are pre-specified. For example, they are created on the basis of empirical data about how expert artists and image croppers transform a given digital image into a cropped one. The rules, criteria and/or templates may be associated with particular situations, such as templates for passport photographs, templates for landscape photographs, templates for portrait photographs, rules for images of still life objects, rules for images of moving objects etc. An example of a rule may be to preserve a ratio of 1 /3 sky to 2/3 ground in an image of a landscape scene.

Appropriate ones of the rules, criteria and/or templates are then selected (see box 122). This selection can be made on the basis of user input or automatically on the basis of the object level information in the source image. For example, if the object level information indicates that the image comprises a person in the foreground and grass in the background, the portrait photograph template may be selected.

Using the selected rules, criteria or templates the source image is then cropped (see box 123).

### Auto-colour balance using object level information

It can often be the case that due to artifacts and other processes, the colour distribution of a given digital image is not realistic, not aesthetically pleasing or inaccurate. In such situations it is known to change the colour distribution either manually or semi-automatically by trial and error. We improve on this by enabling object-level information to be used to guide and improve colour balancing.

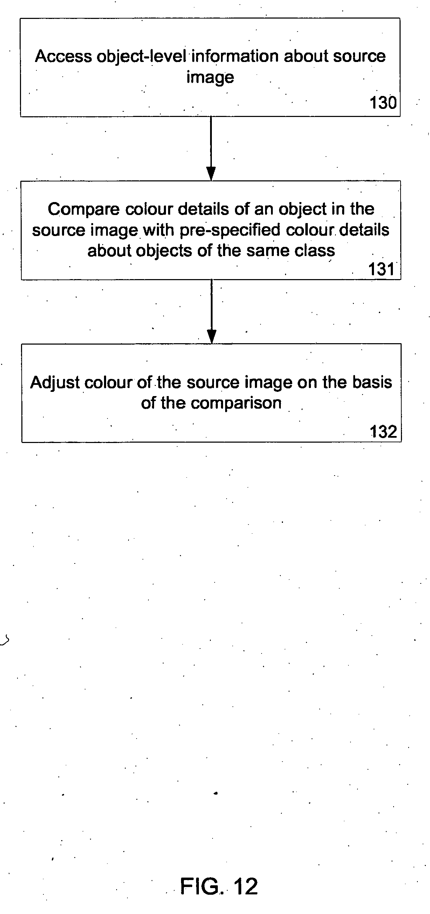

FIG. 12 is a flow diagram of a method of automatically colour balancing an image using object -level information. The object -level information about the source image is accessed (see box 130) as described above. A comparison is then made (see box 131) of the colour details of an object in the source image with pre-specified colour details about objects of the same class (see box 131). For example, suppose an image comprises an object of class grass. The colour distribution of that object in the actual image might be biased towards a particular value which is substantially different from known, pre-specified colour distributions for objects of class grass. The difference between the two colour distributions provides an indication as to how the colour distribution of the whole source image should be adjusted to provide a more realistic and/or pleasing result. The colour details compared can be colour distributions, colour values, particular colour statistics or any other suitable colour information. It is then possible to adjust the colour of the source image on the basis of the comparison (see box 132). The colour of only the object can be changed or of the whole image.

### TouchCut

The use of object-level information in the image editing system as described herein is particularly advantageous because it enables single-click (or single user action) object selection. This ability is particularly useful for image editors who typically need to edit given objects in an image separately or independently of the rest of the image. Previously, it has been necessary to manually draw around required objects to select them, using lassoing tools, drawing tools or the like. This is time consuming and requires fine manual dexterity and expertise. The single-click object selection of the present application avoids these problems and is also referred to herein as TouchCut.

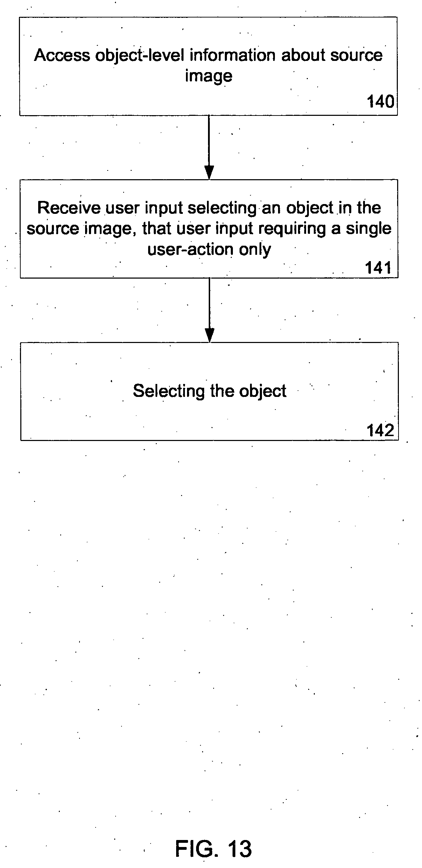

FIG. 13. is a flow diagram of such a method. Object-level information is accessed about the source image (see box 140) as described above. The image editing system then receives a user input selecting an object in the source image. This user input can be of any suitable type such as a mouse click, touch screen event, key press, sound or other user input. The user input requires only a single user-action to be made in order to select the object (see box 141). This is a huge improvement over the prior art where objects generally had to be selected by drawing round their borders. The image editing system then selects the object (box 142) and may or may not indicate this via the user interface, for example, by highlighting the selected object, presenting a flashing border around the selected object or in other ways.

FIG. 14 shows a source image 20 of a group of four cows against a background of grass. TouchCut is used to select the foreground object, being the group of four cows 22. This is achieved with a single mouse click anywhere in the region of the source image 20 comprising the cows.

Once TouchCut is used to select an object that object can be manipulated in any suitable manner, for example to emphasise that object by changing its colour, focus or size, by adding borders to that object, adding shading, changing the depth ordering of the object relative to other objects in the image, or in any other suitable manner. Alternatively, such actions or manipulations can be made to the parts of the source image which are not selected.

A particular embodiment in which the selected object is replaced by another image is now discussed.

### SmartReplace

FIG. 1 5 shows example user interface displays of our image editing system where SmartReplace is used. A first user interface display 50 comprises an image of an aeroplane standing on grass in front of a building above which sky is visible. In that first user interface display 50 it can be seen that the sky object 54 has been selected using TouchCut or in any other suitable manner. In this example the selection is indicated by a dotted border around the sky object 54. In addition a menu 53 of possible actions to be performed on the sky object is presented. The menu comprises the options: replace and colour levels in this example.

Suppose that the user selects the replace option; display 51 is then presented. A command bar is presented indicating that the replace function is current and providing two example sky object instances 55 to use to replace the existing sky. The user selects one of these object instances and clicks apply. The sky object of the first display 50 is then replaced by the selected sky object instance as indicated in the second display 51.

Suppose that the user proceeds to erase the building object and the grass object and fill these image regions in with sky; the result is indicated in the third display 52 showing an aeroplane against sky only. Sky has been used to fill in the regions previously occupied by building and grass. In this display the command bar now shows the option to erase the aeroplane object or to fill in again 56 and this can be done whilst ignoring the object labels 57 if required.

Thus SmartReplace involves using object-level information about a selected object to select appropriate material with which to replace the selected object. FIG. 16 is a flow diagram of a method of SmartReplace.

For a selected object in a source image, the image editing system accesses object-level information about that object and/or the source image as a whole (see box 170). A reference object is then selected from a database (see box 171). The reference object is preferably of the same class or a related class to the selected object. For example, clear sky may be replaced by a cloudy sky. Alternatively, an image of a cow which is unclear may be replaced by an image of a horse. The selection may also be made on the basis of object-level information about the source image as a whole. For example, that information might indicate that the source image is a landscape photograph so that object instances inappropriate for inclusion in such a landscape are not selected. The next stage involves replacing the selected object with the reference object (see box 172). This is achieved in any suitable manner as known to the skilled person. In a particular embodiment the smart replace process comprises object synthesis. For example, suppose that it is required to change the image of a particular instance of a person by replacing the hair on that person. In this case the object-level information is used to identify and locate the hair object part of the person image. Tiles are picked from a database such that the tiles are from another instance of a hair object part. Those selected tiles are then used to replace the existing hair in the image. In this way a new object instance of a particular class is created; that new object instance not having been part of the database.

### Smart depth of field manipulation

The object-level information can also be used for smart depth of field manipulation. For example, FIG. 17 shows two user interface displays 180, 181 from the image editing system. The first user interface display 180 shows a source image of a person 31 standing in the foreground with a grassed area receding into the background. TouchCut or any other suitable method is used to select the person 31 as described above. A menu 32 is presented indicating the actions that are possible with respect to the image of the person 31. These include for example, erase, focus, fix red eye and colour levels. Suppose focus is selected. This is indicated in a command bar in the second user interface display 181. A slider bar for adjusting the level of blur 33 is provided and when the amount of blur is selected to be high the results are shown in display 181. It can be seen that the image of the person 31 is retained in focus whilst blur is applied to the rest of the image. However, this is not essential. The depth of field can be adjusted in any suitable way taking into account the object-level information.

### User interface improvements

We also improve the user interface of the image editing system using the object-level information. This is achieved by arranging the user interface such that the editing options presented to a user via the interface are selected on the basis of the object-level information associated with the selected object. For example, in FIG. 5 the menu 32 associated with the selected image of a person 31 comprises options suitable for operation on the image of the person. These comprise: erase, focus, fix red eye, colour/levels. In contrast, FIG. 1 5 shows menu 53 associated with the object, sky. This menu only presents the options of replace and colour/levels. This is because operations such as fix red eye and focus are not appropriate for objects of class sky. In order to achieve this class specific editing options are specified and are accessible to the image editing system. Menu options may depend on attributes of the object class, e.g. is it structured or does it belong to a broader category e.g. vehicles.

FIG. 18 is a flow diagram of a method of providing a user interface of an image editing system using object level information. Object-level information is accessed about an image being displayed at the user interface (see box 190). An object in the image is then selected (see box 191). For example, this is achieved using a user input or is carried out automatically by the editing system. Class specific editing options are then accessed from a store of specified class specific editing options. Editing options appropriate for the class of the selected object are accessed (see box 192) and presented via the user interface (see box 193).

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

Although the present examples are described and illustrated herein as being implemented in an image editing system for digital still images, the system described is provided as an example and not a limitation. As those skilled in the art will appreciate, the present examples are suitable for application in a variety of different types of image processing systems such as video processing, medical image manipulation systems, virtual reality systems, computer game presentation systems, and editing facilities built into a camera

## Claims

1. A method of editing a source digital image comprising the steps of:
(i) accessing automatically generated object-level information about the source digital image and at least one reference digital image, that information comprising segmentation of the source and reference images into one or more objects and, for each of the objects, details of a class that the object is a member of;
(ii) cutting or copying an object from the source image;
(iii) comparing the object-level information about the cut or copied object and about the one or more objects in the reference image;
(iv) editing the cut or copied object on the basis of the comparison;
(v) pasting the edited object into the reference image to form an output digital image.

2. A method as claimed in claim 1 wherein the object-level information comprises any of: information about depth ordering of at least some of the objects; object attributes; and information about the position of object parts.

3. A method as claimed in any preceding claim wherein cutting the object from the source image comprises using tiles of image data and wherein selection of the tiles is carried out on the basis of the object-level information.

4. A method as claimed in claim 3 wherein the tiles are to be added to a particular object in the source image, those tiles being selected on the basis of the object-level information about that particular object, the selection being from the particular object in any of: the source and reference images, other objects of the same class in the source and reference images, and a store of other objects of the same class.

5. A method as claimed in any of claims 3 and 4 wherein the tiles are selected on the basis of depth ordering information.

6. A method as claimed in claim 1 wherein the step of editing the cut or copied object comprises filling in any regions of that object that had been occluded in the source image on the basis of object-level information about the object.

7. A method as claimed in any of claims 1 to 6 wherein said step of editing the cut or copied object comprises any of: resizing, recolouring, refocusing, changing the orientation, changing facial expressions, and changing illumination.

8. A method as claimed in claim 1 wherein the object level information comprises information about the relative size of objects of different classes and depth ordering information; and wherein editing the cut or copied object comprises determining an appropriate size for the cut or copied object using the depth ordering information and the information about relative size of objects of different classes and altering the size of the cut or copied object to correspond to the scale of objects in the reference image.

9. A method as claimed in claim 1 wherein the object level information comprises depth ordering information and depth of field information and wherein editing the cut or copied object comprises applying a focus to the cut or copied object, the focus determined using the depth ordering information and the depth of field information.

10. A computer program comprising computer program code means adapted to perform all the steps of any of the preceding claims when said program is run on a computer

11. A computer program as claimed in claim 10 embodied on a computer readable medium

12. An apparatus for editing a source digital image comprising:
(i) an interface arranged to access automatically generated object-level information about the source digital image and at least one reference digital image, that information comprising segmentation of the source and reference images into one or more objects and, for each of the objects, details of a class that the object is a member of;
(ii) a processor arranged to cut or copy an object from the source image;
(iii) the processor being arranged to compare the object-level information about the cut or copied object and about the one or more objects in the reference image;
(iv) the processor being arranged to edit the cut or copied object on the basis of the comparison;
(v) the processor being arranged to paste the edited object into the reference image to form an output digital image.

13. An apparatus as claimed in claim 12 wherein the processor is arranged to cut the object from the source image using tiles of image data and wherein selection of the tiles is carried out on the basis of the object-level information.

14. An apparatus as claimed in claim 13 wherein the processor is arranged to add the tiles to a particular object in the source image, and to select those tiles on the basis of the object-level information about that particular object, the selection being from the particular object in any of: the source and reference images, other objects of the same class in the source and reference images, and a store of other objects of the same class.

15. An apparatus as claimed in any of claims 12 to 14 wherein the processor is arranged to fill in any regions of the cut or copied object that had been occluded in the source image on the basis of object-level information about the object.

16. An apparatus as claimed in any of claims 12 to 15 wherein said processor is arranged to edit the cut or copied object using any of: resizing, recolouring, refocusing, changing the orientation, changing facial expressions, and changing illumination.

## Patentansprüche

1. Ein Verfahren zum Bearbeiten eines digitalen Quellbildes aufweisend die Schritte von:
(i) Zugreifen auf automatisch generierte Objektebene-Information über das digitale Quellbild und zumindest ein digitales Referenzbild, diese Information aufweisend Segmentierung von den Quell- und Referenzbildern in ein oder mehrere Objekte und, für jedes von den Objekten, Details über eine Klasse zu der das Objekt zugehörig ist;
(ii) Ausschneiden oder Kopieren eines Objekts aus dem Quellbild;
(iii) Vergleichen der Objektebene-Information über das ausgeschnittene oder kopierte Objekt und über das eine oder die mehreren Objekte in dem Referenzbild;
(iv) Bearbeiten des ausgeschnittenen oder kopierten Objekts auf der Basis von dem Vergleich;
(v) Einsetzen des bearbeiteten Objekts in das Referenzbild, um ein digitales Ausgangsbild zu formen.

2. Ein Verfahren wie beansprucht in Anspruch 1 wobei die Objektebene-Information aufweist eines von: Information über Tiefenordnung von zumindest einigen von den Objekten; Objektattribute; und Information über die Position von Objektteilen.

3. Ein Verfahren wie beansprucht in einem vorangegangenen Anspruch wobei Ausschneiden des Objekts aus dem Quellbild aufweist Verwenden von Bilddatenplatten und wobei eine Auswahl von den Platten ausgeführt wird auf der Basis von der Objektebene-Information.

4. Ein Verfahren wie beansprucht in Anspruch 3 wobei die Platten zu einem bestimmten Objekt in dem Quellbild hinzugefügt werden müssen, diese Platten werden ausgewählt auf der Basis von der Objektebene-Information über das bestimmte Objekt, die Auswahl ist aus dem bestimmten Objekt in einem von: den Quell- und Referenzbildern, andere Objekte von derselben Klasse in den Quell- und Referenzbildern, und einem Speicher von anderen Objekten von derselben Klasse.

5. Ein Verfahren wie beansprucht in einem von den Ansprüchen 3 und 4 wobei die Platten ausgewählt werden auf der Basis von Tiefenordnungsinformation.

6. Ein Verfahren wie beansprucht in Anspruch 1 wobei der Schritt von Bearbeiten des ausgeschnittenen oder kopierten Objekts aufweist Auffüllen jeglicher Regionen von dem Objekt, die verdeckt wurden in dem Quellbild, auf der Basis von Objektebene-Information über das Objekt.

7. Ein Verfahren wie beansprucht in einem von den Ansprüchen 1 bis 6 wobei der besagte Schritt von Bearbeiten des ausgeschnittenen oder kopierten Objekts aufweist eines von: Größenanpassung, Farbanpassung, Nachfokussierung, Ändern der Ausrichtung, Ändern von Gesichtsausdrücken, und Ändern der Belichtung.

8. Ein Verfahren wie beansprucht in Anspruch 1 wobei die Objektebene-Information aufweist Information über die relative Größe von Objekten von unterschiedlichen Klassen und Tiefenordnungsinformation; und wobei Bearbeiten des ausgeschnittenen oder kopierten Objekts aufweist Bestimmen einer angemessenen Größe für das ausgeschnittene oder kopierte Objekt unter Verwendung der Tiefenordnungsinformation und der Information über relative Größe von Objekten von unterschiedlichen Klassen und Abändern der Größe von dem ausgeschnittenen oder kopierten Objekt, um der Größenordnung von Objekten in dem Referenzbild gleichzukommen.

9. Ein Verfahren wie beansprucht in Anspruch 1 wobei die Objektebene-Information aufweist Tiefenordnungsinformation und Feldtiefeninformation und wobei Bearbeiten des ausgeschnittenen oder kopierten Objekts aufweist Anwenden eines Fokus auf das ausgeschnittene oder kopierte Objekt, der Fokus bestimmt unter Verwendung der Tiefenordnungsinformation und der Feldtiefeninformation.

10. Ein Computerprogramm aufweisend Computerprogrammcodemittel angepasst, um all die Schritte von einem von den vorangegangenen Ansprüchen durchzuführen, wenn das besagte Programm auf einem Computer laufen gelassen wird.

11. Ein Computerprogramm wie beansprucht in Anspruch 10 verkörpert auf einem computerlesbaren Medium.

12. Eine Vorrichtung zum Bearbeiten eines digitalen Quellbildes aufweisend:
(i) eine Schnittstelle angeordnet, um zuzugreifen auf automatisch generierte Objektebene-Information über das digitale Quellbild und zumindest ein digitales Referenzbild, diese Information aufweisend Segmentierung von den Quell- und Referenzbildern in ein oder mehrere Objekte und, für jedes von den Objekten, Details über eine Klasse zu der das Objekt zugehörig ist;
(ii) einen Prozessor angeordnet, um ein Objekt aus dem Quellbild auszuschneiden oder zu kopieren;
(iii) der Prozessor ist angeordnet, um die Objektebene-Information über das ausgeschnittene oder kopierte Objekt und über das eine oder die mehreren Objekte in dem Referenzbild zu vergleichen;
(iv) der Prozessor ist angeordnet, um das ausgeschnittene oder kopierte Objekt auf der Basis von dem Vergleich zu bearbeiten;
(v) der Prozessor ist angeordnet, um das bearbeitete Objekt in das Referenzbild einzusetzen, um ein digitales Ausgangsbild zu formen.

13. Eine Vorrichtung wie beansprucht in Anspruch 12 wobei der Prozessor angeordnet ist, um das Objekt aus dem Quellbild auszuschneiden unter Verwendung von Bilddatenplatten und wobei eine Auswahl von den Platten ausgeführt wird auf der Basis von der Objektebene-Information.

14. Eine Vorrichtung wie beansprucht in Anspruch 13 wobei der Prozessor angeordnet ist, um die Platten zu einem bestimmten Objekt in dem Quellbild hinzuzufügen, und um diese Platten auf der Basis von der Objektebene-Information über das bestimmte Objekt auszuwählen, die Auswahl ist aus dem bestimmten Objekt in einem von: den Quell- und Referenzbildern, andere Objekte von derselben Klasse in den Quell- und Referenzbildern, und einem Speicher von anderen Objekten von derselben Klasse.

15. Eine Vorrichtung wie beansprucht in einem von den Ansprüchen 12 bis 14 wobei der Prozessor angeordnet ist, um jegliche Regionen von dem ausgeschnittenen oder kopierten Objekt, die verdeckt wurden in dem Quellbild, aufzufüllen auf der Basis von Objektebene-Information über das Objekt.

16. Eine Vorrichtung wie beansprucht in einem von den Ansprüchen 12 bis 15 wobei der besagte Prozessor angeordnet ist, um das ausgeschnittene oder kopierte Objekt zu bearbeiten unter Verwendung von einem von: Größenanpassung, Farbanpassung, Nachfokussierung, Ändern der Ausrichtung, Ändern von Gesichtsausdrücken, und Ändern der Belichtung.

## Revendications

1. Une méthode d'édition d'une image numérique source comprenant les étapes consistant à :
(i) accéder à des informations de niveau objet produites automatiquement concernant l'image numérique source et au moins une image numérique de référence, ces informations comprenant la segmentation des images source et de référence en un ou plusieurs objets et, pour chacun des objets, des détails d'une catégorie dont l'objet est un élément ;
(ii) couper ou copier un objet à partir de l'image source ;
(iii) comparer les informations de niveau objet concernant l'objet coupé ou copié et concernant le ou les plusieurs objets dans l'image de référence ;
(iv) éditer l'objet coupé ou copié sur la base de la comparaison ;
(v) coller l'objet édité dans l'image de référence pour former une image numérique de sortie.

2. Une méthode selon la revendication 1, dans laquelle les informations de niveau objet comprennent n'importe lesquels : d'informations concernant un ordonnancement de profondeur d'au moins certains des objets ; d'attributs d'objet ; et d'informations concernant la position de parties d'objet.

3. Une méthode selon n'importe quelle revendication précédente, dans laquelle la coupe de l'objet à partir de l'image source comprend l'utilisation de pavés de données d'image et dans laquelle la sélection des pavés est effectuée sur la base des informations de niveau objet.

4. Une méthode selon la revendication 3, dans laquelle les pavés doivent être ajoutés à un objet particulier dans l'image source, ces pavés étant sélectionnés sur la base des informations de niveau objet concernant cet objet particulier, la sélection étant à partir de l'objet particulier dans n'importe lesquels : des images source et de référence, d'autres objets de la même catégorie dans les images source et de référence, et un stockage d'autres objets de la même catégorie.

5. Une méthode selon n'importe laquelle des revendications 3 et 4, dans laquelle les pavés sont sélectionnés sur la base d'informations d'ordonnancement de profondeur.

6. Une méthode selon la revendication 1, dans laquelle l'étape d'édition de l'objet coupé ou copié comprend le remplissage dans n'importe quelles régions de cet objet qui avait été masqué dans l'image source sur la base des informations de niveau objet concernant l'objet.

7. Une méthode selon n'importe laquelle des revendications 1 à 6, dans laquelle ladite étape d'édition de l'objet coupé ou copié comprend n'importe lequel : d'un redimensionnement, d'une recoloration, d'une refocalisation, d'un changement d'orientation, d'un changement d'expressions de visage, et d'un changement d'éclairage.

8. Une méthode selon la revendication 1, dans laquelle les informations de niveau objet comprennent des informations concernant la taille relative d'objets de catégories différentes et des informations d'ordonnancement de profondeur ; et dans laquelle l'édition de l'objet coupé ou copié comprend la détermination d'une taille appropriée pour l'objet coupé ou copié en utilisant les informations d'ordonnancement de profondeur et les informations concernant la taille relative d'objets de catégories différentes et la modification de la taille de l'objet coupé ou copié pour correspondre à l'échelle d'objets dans l'image de référence.

9. Une méthode selon la revendication 1, dans laquelle les informations de niveau objet comprennent des informations d'ordonnancement de profondeur et des informations de profondeur de champ et dans laquelle l'édition de l'objet coupé ou copié comprend l'application d'une distance focale à l'objet coupé ou copié, la distance focale étant déterminée en utilisant les informations d'ordonnancement de profondeur et les informations de profondeur de champ.

10. Un programme informatique comprenant un moyen formant code de programme informatique conçu pour effectuer toutes les étapes de n'importe laquelle des revendications précédentes lorsque ledit programme est exécuté sur un ordinateur.

11. Un programme informatique selon la revendication 10 incorporé sur un support lisible par ordinateur.

12. Un appareil pour éditer une image numérique source comprenant :
(i) une interface agencée pour avoir accès à des informations de niveau objet produites automatiquement concernant l'image numérique source et au moins une image numérique de référence, ces informations comprenant la segmentation des images source et de référence en un ou plusieurs objets et, pour chacun des objets, des détails d'une catégorie dont l'objet est un élément ;
(ii) un processeur agencé pour couper ou copier un objet à partir de l'image source ;
(iii) le processeur étant agencé pour comparer les informations de niveau objet concernant l'objet coupé ou copié et concernant le ou les plusieurs objets dans l'image de référence ;
(iv) le processeur étant agencé pour éditer l'objet coupé ou copié sur la base de la comparaison ;
(v) le processeur étant agencé pour coller l'objet édité dans l'image de référence pour former une image numérique de sortie.

13. Un appareil selon la revendication 12, dans lequel le processeur est agencé pour couper l'objet à partir de l'image source en utilisant des pavés de données d'image et dans laquelle la sélection des pavés est effectuée sur la base des informations de niveau objet.

14. Un appareil selon la revendication 13, dans lequel le processeur est agencé pour ajouter les pavés à un objet particulier dans l'image source, et pour sélectionner ces pavés sur la base des informations de niveau objet concernant cet objet particulier, la sélection étant à partir de l'objet particulier dans n'importe lesquels : d'images source et de référence, d'autres objets de la même catégorie dans les images source et de référence, et d'un stockage d'autres objets de la même catégorie.

15. Un appareil selon n'importe laquelle des revendications 12 à 14, dans lequel le processeur est agencé pour remplir dans n'importe quelles régions de l'objet coupé ou copié qui avait été masqué dans l'image source sur la base des informations de niveau objet concernant l'objet.

16. Un appareil selon n'importe laquelle des revendications 12 à 15, dans lequel ledit processeur est agencé pour éditer l'objet coupé ou copié en utilisant n'importe lequel : d'un redimensionnement, d'une recoloration, d'une refocalisation, d'un changement d'orientation, d'un changement d'expressions de visage et d'un changement d'éclairage.
